(19) Europäisches Patentamt
European Patent Office
Office européen des brevets

(11) EP 2 388 372 B1

(12) **EUROPEAN PATENT SPECIFICATION**

(45) Date of publication and mention
of the grant of the patent:
**18.09.2013 Bulletin 2013/38**

(51) Int Cl.:
***D07B 1/06*** *(2006.01)*  ***B60C 9/00*** *(2006.01)*

(21) Application number: **09834448.4**

(86) International application number:
**PCT/JP2009/007150**

(22) Date of filing: **22.12.2009**

(87) International publication number:
**WO 2010/073641 (01.07.2010 Gazette 2010/26)**

(54) **STEEL CORD FOR REINFORCEMENT OF RUBBER ARTICLE AND PNEUMATIC TIRE USING SAME**

STAHLKORD ZUR ARMIERUNG EINES GUMMIERZEUGNISSES SOWIE DAVON GEBRAUCH MACHENDER LUFTREIFEN

CÂBLE EN ACIER POUR LE RENFORCEMENT D'UN ARTICLE EN CAOUTCHOUC ET ENVELOPPE PNEUMATIQUE L'UTILISANT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.12.2008 JP 2008326593**

(43) Date of publication of application:
**23.11.2011 Bulletin 2011/47**

(73) Proprietor: **Bridgestone Corporation
Tokyo 104-8340 (JP)**

(72) Inventor: **MATSUO, Hiroyuki
Kodaira-shi
Tokyo 187-0031 (JP)**

(74) Representative: **Waldren, Robin Michael et al
Marks & Clerk LLP
90 Long Acre
London
WC2E 9RA (GB)**

(56) References cited:
JP-A- 9 158 066     JP-A- 9 228 274
JP-A- 2007 063 724   JP-A- 2007 118 850

**Description**

[Technical Field]

The present invention relates to a steel cord for reinforcing rubber articles (hereinafter, also simply referred to as "steel cord") and a pneumatic tire using the steel cord (hereinafter, also simply referred to as "tire"), and more particularly, to a steel cord having a 2+6 structure for reinforcing rubber articles in which sheath wires are not deviated and which has an excellent rubber penetration (hereinafter, also simply referred to as "rubber penetration") property and a tire which has an excellent durability using the steel cord.

[Background Art]

In a pneumatic tire which is a typical example of rubber articles, as a cause of decreasing the durability of the tire, a separation is known which is generated in such a way that water which is penetrated into an internal belt or the like from the outside of the tire through a cut-flaw or the like corrodes cords of the belt, and the cords are separated from the rubber because of expansion of the corroded area.

In order to avoid the separation, a so-called rubber penetration structure is effective in which gaps between wires of the cord where water spreads are not to be formed by making rubber sufficiently penetrate into the inside of the cords. This rubber penetration structure attains rubber penetration by expanding the gaps between the wires by loosely twisting the cords.

For example, Patent Document 1 discloses a steel cord having a core composed of two untwisted steel wires, and five to eight sheath wires having a diameter of 0.8 to 1.2 times the diameter of the core wires which are wound around the core at a sheath interval of 0.02 to 0.25mm. Patent Document 2 discloses a steel cord having a 2+6 structure in which the twist pitch of a core composed of two steel wires is 30 mm or larger, the diameter of six sheath wires is larger than 58.0% and smaller than 161.15% of the diameter of the core wire, and the diameter of the sheath wire is 0.10 mm to 0.30 mm. Patent Document 3 discloses a steel cord composed of steel wires in which a core is composed of two untwisted steel wires, the diameter of the core wire is 0.25 mm to 0.40 mm, and the diameter of a sheath wire is such that (0.75 x diameter of core wire - 0.5 x diameter of sheath wire) is in the range of 0.05 to 0.10. Further, Patent Document 4 discloses a steel cord which is composed of a core composed of two twisted steel wires and five to seven sheath wires, in which 0.05 mm ≤ diameter of core wire < 0.26 mm, 0.05 mm ≤ diameter of sheath wire < 0.26 mm, and 0.7 < diameter of core wire/ diameter of sheath wire < 1.

[Related Art Document]

[Patent Document]

Patent Document 1: Japanese Unexamined Patent Application Publication No. H09-156314
Patent Document 2: Japanese Unexamined Patent Application Publication No. H09-158066
Patent Document 3: Japanese Unexamined Patent Application Publication No. H11-81168
Patent Document 4: Japanese Unexamined Patent Application Publication No. 2007-063724
Patent Document 5: Japanese Unexamined Patent Application Publication No. 2007-118850, which corresponds to the preamble of claim 1.

[Summary of the Invention]

[Problems to be solved by the Invention]

However, it is known that, in a steel cord having a 2+6 structure, when the gaps between sheath wires are too large, the dispersity of the sheath wires deviates, and when the gaps between sheath wires are small, rubber penetration will not occur. That is, in the steel cords described in Patent Documents 1 and 3, the gaps between the sheath wires are too large and the dispersity of the sheath wires deviates. In the steel cords described in Patent Document 2, when the upper limit of the diameter of the core wire is employed, the gaps between sheath wires are too large and the dispersity of the sheath wires deviates, and on the other hand, when the lower limit of the diameter of the core wire is employed, the gaps between sheath wires are small and rubber penetration will not occur. In the steel cords described in Patent Document 4, when the upper limit of the diameter of the core wire is employed, the gaps between sheath wires are too large and the dispersity of the sheath wires deviates. That is, it is quite difficult for the conventional steel cords to balance the deviation of the sheath wires with rubber penetration property.

Accordingly, an object of the present invention is to provide a steel cord having a 2+6 structure for reinforcing rubber articles in which sheath wires are not deviated and which has an excellent rubber penetration property and a pneumatic tire which has an excellent durability using the steel cord.

[Means for solving the Problems]

In order to solve the above problems, the present inventor intensively studied to find out that the above problems can be solved by defining, in a steel cord having a 2+6 structure, the relation between the diameter of the core wire and the diameter of the sheath wire as described below, thereby completing the present invention.

That is, the steel cord for reinforcing rubber articles of the present invention is a steel cord for reinforcing rubber articles composed of a core composed of two untwisted steel wires and six sheath wires which are twisted around the core, wherein

the average of gap distances between the adjacent sheath wires is 24 μm or larger, and the occupancy of the sheath wires disposed around the core with respect to a sheath wire disposition area is 80% or larger.

In the present invention, the occupancy of the sheath wires is preferably 84% or larger.

The pneumatic tire of the present invention is a pneumatic tire which has, as a skeleton, a carcass extending toroidally between a pair of beads, and in which the crown portion of the carcass is reinforced by (a) belt layer(s), **characterized in** that

the steel cord for reinforcing rubber articles is applied as a cord which constitutes the carcass and/or the belt layer(s).

[Effects of the Invention]

By the present invention, a steel cord having a 2+6 structure for reinforcing rubber articles in which sheath wires are not deviated and which has an excellent rubber penetration property and a tire which has an excellent durability using the steel cord can be provided.

[Brief Description of the Drawings]

Fig. 1 is a cross-sectional view of a steel cord of one embodiment of the present invention.
Fig. 2 is a graph showing the relation between the average gap distance of sheath wires and the rubber penetration property.
Fig. 3 is a graph showing the relation between the tension applied to sheath wires when the sheath wires are twisted and the deviation of sheath wire gaps.
Fig. 4 is a schematic diagram of the deviation of the sheath wire gaps.

[Modes for Carrying out the Invention]

Preferred modes of the present invention will now be described in detail with reference to the drawings.

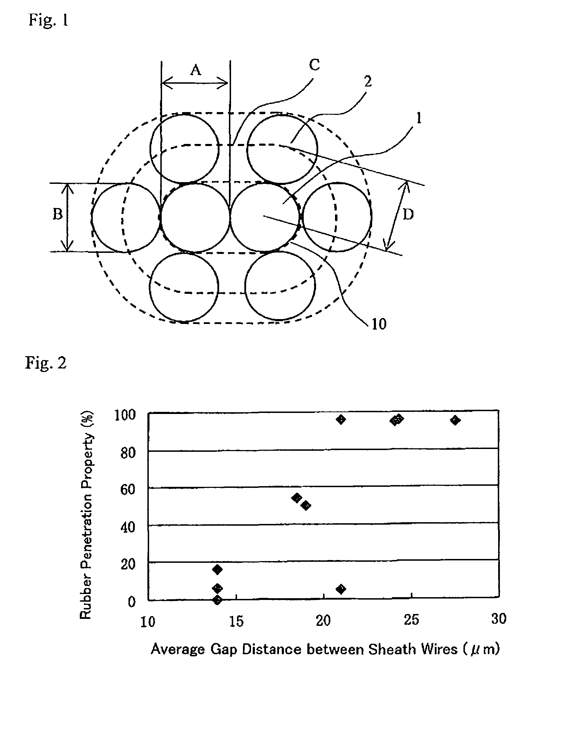

Fig. 1 shows a cross-sectional structure diagram of a steel cord of one preferred embodiment of the present invention. The illustrated steel cord is composed of a core 10 composed of two untwisted core wires 1 and six sheath wires 2 which are twisted around the core 10. Here, letting a trajectory drawn at the position the radius of the sheath wire away from the core 10 be a circumference C, the length of the circumference C (mm) can be represented by

$$C\,(\mathrm{mm}) = (2 \times A) + (2 \times \pi \times D)$$

where the diameter of the core wire is A (mm), the diameter of the sheath wire is B (mm), and the radius of a half circle drawn at the ends of the circumference C is D (D = A/2 + B/2: mm). Here, the average of gap distances between the adjacent sheath wires 2 (hereinafter, also referred to as "sheath wire gap") and the occupancy of sheath wire 2 (hereinafter, also referred to as "sheath wire occupancy") are defined by the following formulae (1) and (2):

$$\text{The average of sheath wire gaps}\,(\mathrm{\mu m}) = (C - 6 \times B)/\,6 \times 1000 \qquad (1)$$

$$\text{Sheath wire occupancy (\%)} = (6 \times B)/C \times 100 \qquad (2).$$

In the present invention, it is important that the average of sheath wire gaps represented by the above formula (1) is 24 $\mu$m or larger. Fig. 2 is a graph showing the relation between the average of sheath wire gaps and the rubber penetration, for steel cords with a variety of structures. As shown in the figure, when the average of sheath wire gaps is 24 $\mu$m or larger, an excellent rubber penetration property can be obtained. On the other hand, when the average of sheath wire gaps is less than 24 $\mu$m, an excellent rubber penetration property cannot be obtained. Based on this discovery, in the present invention, the average of sheath wire gaps of a steel cord was set to 24 $\mu$m or larger. In order to favorably obtain the above effect, the average of sheath wire gaps is preferably 30 $\mu$m or larger.

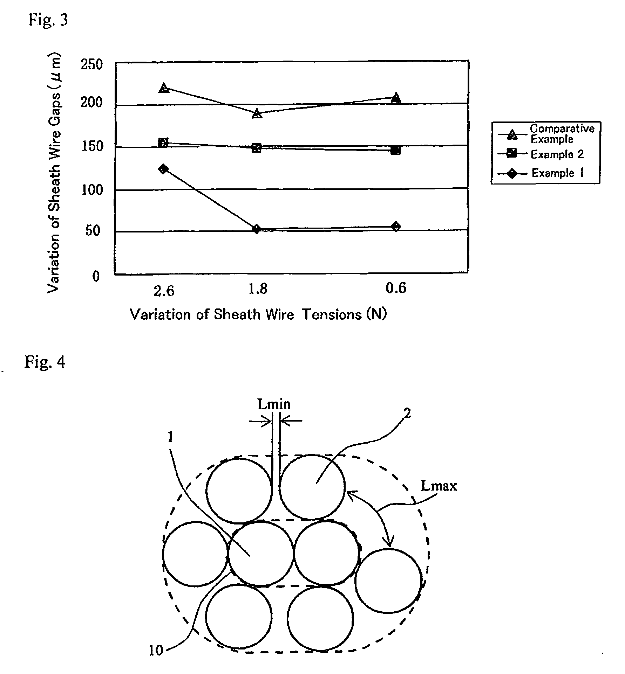

In the present invention, it is also important that the sheath wire occupancy represented by the above formula (2) is 80% or larger. As described above, in the present invention, the average of sheath wire gaps needs to be 24 $\mu$m or larger. However, when the sheath wire gaps are too large, the sheath wire gaps vary and deviate (see Fig. 4), which is not preferred. Accordingly, the sheath wire occupancy defined in the formula (2) needs to be 80% or larger. In the present invention, in order to favorably obtain the above effects, the sheath wire occupancy is preferably 84% or larger.

In the manufacturing process of the steel cord, it is known that the variation of the tensions of the sheath wires when the steel wires are twisted influences the sheath wire gaps. The larger the variation of the tensions of the sheath wires, the easier the sheath wire gaps deviate. However, there is an effect that the higher the sheath wire occupancy is, the smaller the variation of the sheath wire gaps is.

In the present invention, it is important only that the diameter of the core wire and the diameter of the sheath wire meet the above requirements. The other requirements such as a specific diameter of each of the wires, the direction of twisting of the sheath wire and the twist pitch are not especially restricted as long as the above conditions are met, and, depending on the applications, they can be appropriately constituted according to a conventional method.

The steel cord for reinforcing rubber articles of the present invention can be favorably used for, for example, a pneumatic tire in which (a) ply(plies) in which a plurality of the cords are oriented in parallel to each other and embedded in a rubber sheet is(are) applied on both a carcass and (a) belt layer(s) or applied on either the carcass or the belt layer(s). Although not illustrated, the pneumatic tire of the present invention is a pneumatic tire in which the above-described steel cord for reinforcing rubber articles of the present invention is applied on the carcass and/or belt layer(s) of the pneumatic tire which has, as a skeleton, a carcass extending toroidally between a pair of beads, and in which the crown portion of the carcass is reinforced by the belt layer(s). By this, a pneumatic tire having an excellent durability can be obtained.

[Examples]

The present invention will now be described in detail by way of Examples.

(Examples and Comparative Examples)

Steel cords having a 2+6 structure which has the diameter of the core wire, the diameter of the sheath wire, the sheath wire gap and the sheath wire occupancy as shown in the Table 1 below were manufactured by applying the sheath tension as shown in the same table. When each of the steel cords was twisted, the tensions of the respective sheath wires were measured and the variation of the sheath wire tensions as shown in the following formula:

$$\text{Variation of the sheath wire tensions} = \text{Tension}_{max} - \text{Tension}_{min}$$

were calculated.

(Rubber Penetration Property)

Each of the obtained steel cords was embedded in rubber and rubber-steel cord complexes were manufactured. Thereafter, the entire outer layers (sheath wires) of the obtained rubber-steel cord complexes were removed and the core portions were taken out. The lengths of the portions on which the rubber covered were measured viewed from four directions to calculate the rubber penetration property by the following formula:

(rubber penetration property) = (the length of rubber coverage/ the length of the sample) × 100 (%).

The obtained results are also shown in table 1.

(Variation of Sheath Wire Gaps)

All of the sheath wire gaps (six points) for each of steel cords of Examples 1-1 to 2-3 and the Comparative Examples 1-1 to 1-3 were measured. The variation of the sheath wire gaps was calculated by the following formula with the obtained measured values. The relation between the tension of the sheath when being twisted and the variation of the sheath wire gaps is shown in Fig. 3. A schematic diagram of the variation of the sheath wire gaps is shown in Fig. 4.

(The variation of the sheath wire gaps) = (the maximum sheath wire gap $L_{max}$) - (the minimum sheath wire gap $L_{min}$)

[Table 1]

| | Sheath Tension (N) | Core Wire Diameter (mm) | Sheath Wire Diameter (mm) | Sheath Gap *1 (µm) | Sheath Occupancy *2 (%) | Rubber Penetration Property (%) |
|---|---|---|---|---|---|---|
| Example 1-1 | 0.6 | 0.28 | 0.36 | 68 | 84 | 98 |
| Example 1-2 | 1.8 | 0.28 | 0.36 | 68 | 84 | 98 |
| Example 1-3 | 2.6 | 0.28 | 0.36 | 68 | 84 | 94 |
| Example 2-1 | 0.6 | 0.30 | 0.36 | 86 | 81 | 92 |
| Example 2-2 | 1.8 | 0.30 | 0.36 | 86 | 81 | 92 |
| Example 2-3 | 2.6 | 0.30 | 0.36 | 86 | 81 | 88 |
| Example 3 | 1.8 | 0.175 | 0.126 | 25 | 88 | 93 |
| Example 4 | 1.8 | 0.18 | 0.129 | 25 | 88 | 95 |
| Example 5 | 1.8 | 0.32 | 0.21 | 28 | 92 | 95 |
| Comparative Example 1-1 | 0.6 | 0.32 | 0.36 | 103 | 78 | 55 |
| Comparative Example 1-2 | 1.8 | 0.32 | 0.36 | 103 | 78 | 55 |
| Comparative Example 1-3 | 2.6 | 0.32 | 0.36 | 103 | 78 | 48 |

*1 The average of the sheath wire gaps

*2 The sheath wire occupancy

From the Table 1, it is found that a favorable rubber penetration property can be obtained when the average of the sheath wire gaps and the sheath wire occupancy are in the range of the present invention.
Fig. 3 is a graph showing the relation between the tension applied to a sheath wire and the deviation of sheath wire gaps when the sheath wires were twisted in a steel cord manufacturing process. The higher the sheath wire occupancy is, the smaller the variation of the sheath wire gaps becomes. Even when the sheath wire occupancy is in a high level, the larger the variation of the tensions of the sheath wires when the steel wires are twisted is, the larger the variation of the sheath wire gaps becomes. In any tension conditions, the higher the sheath wire occupancy is, the smaller the variation becomes. That is, it is found that, in the steel cord of the present invention, even in the conditions that the variation of the tensions is large, the sheath wire gap is hard to deviate.

[Description of Symbols]

1    core wire

2    sheath wire

10    core

**Claims**

1.    A steel cord for reinforcing rubber articles composed of a core composed of two untwisted steel wires and six sheath wires which are twisted around the core, wherein
the occupancy of the sheath wires disposed around the core with respect to a sheath wire disposition area is 80% or larger, **characterized in that** the average of gap distances between the adjacent sheath wires is 24 $\mu$m or larger.

2.    The steel cord for reinforcing rubber articles according to claim 1, wherein the occupancy of the sheath wire is 84% or larger.

3.    A pneumatic tire which has, as a skeleton, a carcass extending toroidally between a pair of beads, and in which the crown portion of the carcass is reinforced by (a) belt layer(s), **characterized in that**
the steel cord for reinforcing rubber articles according to claim 1 is applied as a cord which constitutes the carcass and/or the belt layer(s).

**Patentansprüche**

1.    Stahlkord zum Verstärken von Gummiartikeln bestehend aus einem Kern bestehend aus zwei unverdrehten Stahldrähten und sechs Manteldrähten, die um den Kern herum gedreht sind, wobei
der Belegungsgrad der um den Kern herum angeordneten Manteldrähte in Bezug auf einen Manteldraht-Anordnungsbereich 80% oder mehr beträgt, **dadurch gekennzeichnet, dass** der Durchschnitt von Spaltabständen zwischen den benachbarten Manteldrähten 24 $\mu$m oder mehr beträgt.

2.    Stahlkord zum Verstärken von Gummiartikeln nach Anspruch 1, wobei der Belegungsgrad des Manteldrahts 84% oder mehr beträgt.

3.    Reifen, der, als Skelett, eine Karkasse aufweist, die sich toroidal zwischen einem Paar Wülsten erstreckt, und wobei der Kronabschnitt der Karkasse durch (eine) Gürtellage(n) verstärkt wird, **dadurch gekennzeichnet, dass**
der Stahlkord zum Verstärken von Gummiartikeln nach Anspruch 1 als Kord, der die Karkasse und/oder die Gürtellage (n) bildet, verwendet wird.

**Revendications**

1.    Corde en acier pour renforcer des articles en caoutchouc composée d'un noyau composé de deux fils d'acier non tressés et de six fils à gaine protectrice tressés autour du noyau, dans laquelle
le taux d'occupation des fils à gaine protectrice disposés autour du noyau par rapport à une aire de disposition des fils à gaine protectrice est de 80% ou plus, **caractérisée en ce que** la moyenne des espaces vides entre les fils à gaine protectrice adjacents est de 24 $\mu$m ou plus.

2. Corde en acier pour renforcer des articles en caoutchouc selon la revendication 1, dans laquelle le taux d'occupation du fil à gaine protectrice est de 84% ou plus.

3. Bandage pneumatique ayant, en tant que squelette, une carcasse s'étendant de manière toroidale entre une paire de talons, et dans lequel la partie couronne de la carcasse est renforcée par une (des) couche(s) de ceinture, **caractérisé en ce que**
la corde en acier pour renforcer des articles en caoutchouc selon la revendication 1 est utilisée en tant que corde constituant la carcasse et/ou la (les) couches de ceinture.

Fig. 1

Fig. 2

Fig. 3

Fig. 4

**EP 2 388 372 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09156314 B
- JP H09158066 B
- JP H1181168 B
- JP 2007063724 A
- JP 2007118850 A